# EUROPÄISCHE PATENTSCHRIFT

(11) **EP 1 645 109 B1**
(45) Veröffentlichungstag und Bekanntmachung des Hinweises auf die Patenterteilung: **06.08.2014**
(21) Anmeldenummer: 04766039.4
(22) Anmeldetag: 07.06.2004
(51) Int. Cl.: H04M 1/2745, H04M 3/46, H04M 3/493

(54) **VERFAHREN ZUR RUFWEITERLEITUNG AN EINE RUFNUMMER, DIE MITTELS EINES VERZEICHNISSYSTEMES DER URSPRUENGLICH GEWAEHLTEN RUFNUMMER ZUGEORDNET IST**
METHOD FOR FORWARDING A CALL TO A NUMBER THAT IS ASSIGNED TO THE ORIGINAL DIALLED NUMBER BY MEANS OF A DIRECTORY
PROCEDE DE TRANSFERT D'APPEL EN CAS DE NON-REPONSE

(30) Priorität: 03.07.2003 DE 10330074
(43) Veröffentlichungstag der Anmeldung: 12.04.2006
(73) Patentinhaber: Unify GmbH & Co. KG, 81379 München (DE)
(72) Erfinder: LEDERER, Thomas, 82211 Herrsching (DE)
(74) Vertreter: Fritzsche, Thomas
(86) Internationale Anmeldenummer: PCT/EP2004/051049
(87) Internationale Veröffentlichungsnummer: WO 2005/004454

(56) Entgegenhaltungen:
- EP-A- 1 087 599
- EP-A- 1 207 675
- EP-A- 1 267 557
- US-A- 5 027 384
- US-B1- 6 389 278

## Beschreibung

Die Erfindung betrifft ein Verfahren zur Rufweiterleitung sowie eine Anordnung zur Umsetzung des Verfahrens.

Ein bekanntes Verfahren zur Rufweiterleitung ist die automatische Weiterleitung bzw. Umleitung, bei der ein an einem Telekommunikations-Endgerät eingehender Anruf unmittelbar an ein anderes Endgerät oder auch einen Anrufbeantworter des Angerufenen umgeleitet wird. Statt der automatischen oder unbedingten können auch bedingte Rufweiterleitungen eingerichtet werden, die einen eingehenden Anruf abhängig davon weiterleiten, ob das angerufene Endgerät besetzt ist, an diesem also bereits ein Gespräch geführt wird, oder der eingehende Anruf nach einer festgelegten Zeitspanne noch nicht entgegengenommen worden ist. Insbesondere im Mobilfunkbereich besteht weiterhin die Möglichkeit einer sogenannten Anrufumleitung bzw. -lenkung, falls der Mobilteilnehmer nicht erreichbar ist, wenn also der Mobilteilnehmer sein Mobilfunk-Endgerät nicht eingeschaltet hat oder sein Gerät aus sonstigen Gründen nicht erreichbar ist.

Diese bekannten Anrufumlenkungen bzw. -weiterleitungen werden als Telekommunikationsdienste realisiert, bzw. als einem Leistungsprofil eines übergreifenden Dienstes (z.B. dem ISDN-Telefondienst) zugehörige Leistungsmerkmale. Ein solcher Dienst legt eine bestimmte Art der Telekommunikation zwischen zwei Endgeräten fest, die automatisch, d.h. ohne menschliches. Eingreifen, realisiert wird.

Ein solcher Dienst wird durch Vorsehen von entsprechend ausgebildeten Einrichtungen in den Vermittlungsstellen eines Telekommunikationsnetzwerkes und/oder den Endgeräten implementiert. Damit der Dienst einem einzelnen Benutzer zur Verfügung steht, müssen die Einrichtungen hierfür konfiguriert bzw. eingerichtet werden. Die herkömmlichen Anrufumlenkungen werden dabei durch den angerufenen Teilnehmer, häufig als "B-Teilnehmer" bezeichnet, eingerichtet. Für diesen ist das umständlich, wenn er beispielsweise nur kurzzeitig seinen Arbeitsplatz verlässt. Häufig wird auch das Einrichten einer Umleitung, etwa vor Antritt eines Urlaubs, vergessen. Darüber hinaus berücksichtigt eine einmal eingerichtete Umleitung nicht die verschiedenen möglichen Anliegen der Anrufer bzw. der "A-Teilnehmer". Diesen ist auch mit einer Weiterleitung auf den Anrufbeantworter häufig nicht gedient, z.B. bei eiligen Anfragen.

Häufig besteht beim A-Teilnehmer vielmehr der Wunsch, statt des nicht anwesenden B-Teilnehmers kurzfristig zum Zwecke der Klärung mit einer weiteren Person, dem "C-Teilnehmer" Kontakt aufzunehmen, beispielsweise einem Kollegen bzw. Stellvertreter des B-Teilnehmers, seinem Vorgesetzten, ein dem B-Teilnehmer zugeordnetes Sekretariat etc.. Hierzu muss der A-Teilnehmer das Telefon auflegen, die Telefonnummer der gewünschten Person in Erfahrung bringen und dann erneut wählen.

Bei dieser Telefonnummer könnte es sich auch um eine weitere Nummer des B-Teilnehmers handeln, beispielsweise dessen Mobiltelefonnummer, wenn B sich auf einer Dienstreise befindet.

Diese zweite Rufnummer in Erfahrung zu bringen, ist häufig mit einigem Aufwand verbunden. A muss in Verzeichnissen, Verzeichnislisten, Organisationsplänen oder sonstigen Verzeichnissystemen nachschlagen.

Häufig stehen elektronische Verzeichnissysteme zur Verfügung (Mitarbeiterverzeichnisse), in denen der Benutzer über seinen PC recherchieren muss. Verzeichnissysteme (bspw. nach dem X.500- oder LDAP-Standard) ermöglichen es, auf Verzeichnisse und deren Einträge zuzugreifen, d.h. in diesen zu suchen und zu lesen. Jeder Eintrag besteht aus einer Mehrzahl von Attributen, also bspw. Mitarbeitername, Rufnummer, Abteilung, Büronummer, in die für jeden Mitarbeiter konkrete Attributwerte eingetragen sind. Verzeichnisse können über mehrere Software-/Hardware-Einrichtungen verteilt vorliegen, insbesondere wenn etwa ein Mitgliederverzeichnis eines Grossunternehmens in der Größenordnung 100.000 Einträge enthält, wobei die Mitarbeiter über mehrere Standorte verteilt sind.

Abfragen werden durch Benutzeragenten und VerzeichnissystemAgenten (bzw. die Einheiten, die diese Funktionalität implementieren) realisiert. Solche Abfragen können sich komplex gestalten, wenn bspw. der Benutzeragent nur über eine elektronisch gespeicherte Zuordnungsvorschrift verfügt, die es erlaubt, diejenigen Mitarbeiter des B-Teilnehmers zu ermitteln, die die gleiche Abteilungsbezeichnung haben. Dann müssen in einem zweiten Schritt durch manuelle Inspektion diejenigen Kollegen ermittelt werden, die sich im gleichen Büro befinden.

Solche Abfragen jedesmal am PC einzugeben und manuell nachzubearbeiten ist jedoch aufwendig. Schon wenn sich der Aufwand auf einige Minuten beläuft, steht er häufig nicht mehr in sinnvollem Verhältnis zu dem Inhalt der ursprünglich durch den Anruf beim B-Teilnehmer beabsichtigten Anfrage.

In EP 1 267 557 A1 ist ein System zur Bereitstellung einer Information über einen Ersatzhinweis eines Kontaktes (alternate point of contact) für einen Anrufer beschrieben, bei dem ein Switch und ein Dienstleistungssteuerungspunkt (Services Control Point) im Fall eines nicht verfügbaren gerufenen Endgerätes selbsttätig anhand eines "subscriber feature record" bzw. "call feature record" potentielle Umleitungsziele ermitteln und diese dem rufenden Teilnehmer zur Auswahl präsentieren. Wenn der Anrufer keine Rufumleitung wünscht kann die eingeleitete Rufumleitung erst nach der Präsentation der potentiellen Umleitungsziele vom rufenden Teilnehmer abgebrochen werden. Zu diesem Zeitpunkt ist jedoch zumindest eine Datenbankabfrage mit entsprechender Prozessor- und Kommunikationslast erfolgt. Darüber hinaus können für den rufenden Teilnehmer je nach Netzlast durch die erfolgte Datenbankabfrage Wartezeiten entstehen.

Es besteht daher ein Bedarf, aus dem sich die Aufgabe der vorliegenden Erfindung ergibt, ein Verfahren zur Rufweiterleitung vorzuschlagen, das es dem A-Teilnehmer auf vereinfachte und komfortablere Weise erlaubt, eine dem B-Teilnehmer zugeordnete Person telefonisch zu erreichen, wenn der B-Teilnehmer einen Ruf nicht annimmt. Es ist weiterhin Aufgabe der Erfindung, eine Anordnung vorzuschlagen, mit der ein derartiges Verfahren umgesetzt werden kann.

Diese Aufgabe wird durch ein Verfahren nach Anspruch 1 und eine Anordnung nach Anspruch 11 gelöst. Ein wesentlicher Gedanke der Erfindung besteht darin, einen Telekommunikationsdienst vorzusehen, der es erlaubt, dem A-Teilnehmer eine dem B-Teilnehmer zugeordnete, weitere Rufnummer verfügbar zu machen, indem beispielsweise bereits existierende elektronische Verzeichnisse herangezogen werden. Ein weiterer wesentlicher Aspekt der Erfindung besteht darin, dass der Telekommunikationsdienst durch das Endgerät des A-Teilnehmers angesteuert wird. Dadurch wird das Einrichten von Rufumleitungen am Endgerät des B-Teilnehmers überflüssig oder zumindest vereinfacht. In Ausgestaltungen der Erfindung kann der A-Teilnehmer außerdem selbst entscheiden, ob und ggf. zu wem er eine Weiterleitung wünscht.

Konkret wird ein Verfahren zur Rufweiterleitung vorgeschlagen, dass von der Situation ausgeht, dass eine an einem ersten Telekommunikations-Endgerät eingegebene erste Rufnummer, die einem zweiten Endgerät zugewiesen ist, für einen Verbindungsaufbau zum zweiten Endgerät hin verwendet wird und der Ruf am zweiten Endgerät nicht angenommen wird. Erfindungsgemäß wird vom ersten Endgerät die Übermittlung einer die erste Rufnummer enthaltenden Ermittlungsanfrage-Nachricht zur Ermittlung einer alternativen Rufnummer an einen automatischen Telekommunikationsdienst ausgelöst. Der Telekommunikationsdienst ermittelt daraufhin mittels einer elektronisch gespeicherten Zuordnungsvorschrift aus einem elektronischen Verzeichnissystem, welches die erste Rufnummer und eine Vielzahl von weiteren Endgeräten zugewiesenen Rufnummern enthält, eine zweite Rufnummer eines dritten Endgerätes. Durch einmaliges Konfigurieren des ersten Endgerätes wird erreicht, dass die der ersten Rufnummer zugeordnete zweite Rufnummer automatisch ermittelt wird. Nach Ermittlung der zweiten Rufnummer wird automatisch ein Verbindungsaufbau zwischen dem ersten und dritten Endgerät unter Verwendung der zweiten Rufnummer veranlasst wird.

In einer Ausführungsform dieses Verfahrens wird die der ersten Rufnummer zugeordnete zweite Rufnummer nach fünfmaligen Klingeln automatisch ermittelt. Im Folgenden wird in einem illustrativen Beispiel die Übermittlung der Ermittlungsanfrage-Nachricht in Reaktion auf eine erste Eingabe eines Benutzers am ersten Endgerät ausgelöst.

Bei einer Weiterbildung des erfindungsgemäßen Verfahrens sind in dem Verzeichnissystem jeder Rufnummer Attribute mit Attributwerten zugeordnet. Dann kann die Zuordnungsvorschrift ein Attribut der ersten Rufnummer betreffen, das die zweite Rufnummer enthält, oder ein Attribut betreffen, dessen Wert bei der ersten und der zweiten Rufnummer gleich ist, oder auch eine Kombination aus beiden.

Hierdurch wird es möglich, neben einer zweiten Rufnummer, die der ursprünglich gewählten, ersten Telefonnummer direkt und explizit zugeordnet ist, weitere Telefonnummern zu ermitteln, die beispielsweise Endgeräten zugewiesen sind, die Kollegen mit derselben Abteilungsbezeichnung, derselben Raumnummer oder dergleichen Attributen gehören. Ebenso ist es auf diese Weise möglich, eine zweite geschäftliche Telefonnummer, eine Privatnummer oder eine Mobiltelefonnummer des B-Teilnehmers zu ermitteln. Bei einer Kombination beider Zuordnungsweisen kann z.B. ein Attribut der ersten Rufnummer die Nummern aller Abteilungskollegen enthalten; durch eine ergänzende Suche werden aus diesen Nummern diejenigen ermittelt, die Endgeräten zugewiesen sind, die sich im gleichen Raum befinden.

In einer Ausführungsform des erfindungsgemäßen Verfahrens kann eine Anfrage, die von einer in dem ersten Endgerät vorliegenden Benutzer-Abfrageeinheit bei einer ersten Verzeichnissystem-Abfrageeinheit eingeht, an weitere Verzeichnissystem-Abfrageeinheiten weitergeleitet werden, sofern die erste Verzeichnissystem-Abfrageeinheit die Anfrage nicht selbst beantworten kann. Die weiteren Verzeichnissystem-Abfrageeinheiten übermitteln ihre Ergebnisse direkt oder über die erste Verzeichnissystem-Abfrageeinheit an die anfragende Benutzer-Abfrageeinheit.

In dem illustrativen Beispiel wird die Weiterleitung für den A-Teilnehmer besonders komfortabel, da er die Weiterleitung lediglich durch einmalige Eingabe an seinem Endgerät veranlassen kann, beispielsweise durch Drücken einer Taste oder Auswahl eines Menüpunktes "Weiterleitung?" o.ä.

Alternativ oder in Ergänzung hierzu kann der Telekommunikationsdienst Ermittlungsergebnis-Informationen an das erste Endgerät zurückliefern, die die oder jede zweite Rufnummer und ggf. dieser jeweils zugeordnete Informationen betreffen.

Hierdurch wird es möglich, dem A-Teilnehmer die Ermittlungsergebnis-Informationen beispielsweise an einer Anzeigeeinheit seines Endgerätes anzuzeigen oder mittels Sprachausgabe auszugeben.

In einer Weiterbildung dieses Verfahrens kann der Benutzer durch eine Eingabe den Verbindungsaufbau zum dritten Endgerät hin bewirken, sofern dies nicht bereits automatisch geschehen ist. Diese Weiterbildung ist insbesondere dann von Bedeutung, wenn die Ermittlungsergebnis-Informationen eine Mehrzahl von zweiten Rufnummern betreffen, unter denen der Benutzer auswählt.

In dieser Ausführungsform muss der A-Teilnehmer zwar eine Eingabe bei seinem Endgerät vornehmen, er hat jedoch die Wahl, unter mehreren Möglichkeiten der Weiterleitung auszuwählen. Die Auswahl bzw. Eingabe des A-Teilnehmers kann über ein das erste Endgerät erfolgen, wenn an diesem wenigstens eine der folgenden Einrichtungen ausgebildet ist:
- eine oder mehrere vorbelegte Tasten,
- eine Anzeigeeinheit mit zugeordneten Steuertasten zum Navigieren und Auswählen eines Menüpunktes aus einem auf der Anzeigeeinheit angezeigten Menüs,
- ein Spracherkennungssystem zum Erkennen der ersten und/oder zweiten, als Spracheingabe erfolgenden, Eingabe des Benutzers.

Die Spracheingabe kann über den Telefonhörer oder ein zusätzliches, mit dem Endgerät verbundenes Mikrofon erfolgen ("Telephone-User-Interface", ggf. mit DTMF-Nachwahl). Die Eingabe kann auch über eine als Tastatur ausgebildete Eingabeeinheit des Endgerätes erfolgen, beispielsweise unter Verwendung von Ziffern- und Steuertasten.

Der Telekommunikationsdienst und/oder das Verzeichnissystem kann auf einer zentralen Kommunikationsanlage bzw. einer Vermittlungsstelle des Telekommunikationsnetzes, über das die Endgeräte miteinander verbindbar sind, implementiert sein oder kann verteilt auf mehreren Anlagen bzw. Stellen implementiert sein. Dies ist besondere bei großen Kommunikationsnetzen mit vielen Teilnehmern in Bezug auf Wartung und Pflege des Telekommunikationsdienstes und des Verzeichnisses vorteilhaft. Der Telekommunikationsdienst kann insbesondere auf dem oder den Anlagen bzw. Stellen installiert sein, auf dem oder denen auch das zu durchsuchende Verzeichnis bzw. die Verzeichnisse implementiert ist bzw. sind.

Alternativ oder in Ergänzung hierzu kann der Telekommunikationsdienst und/oder das Verzeichnissystem auch auf den Endgeräten selbst implementiert sein. In diesem Falle ist es beispielsweise denkbar, dass die Teilnehmer die Verzeichnisse auf ihren Endgeräten selbst pflegen oder diese mittels Fernwartung durch einen Administrator gepflegt werden.

Die Merkmale und Vorteile einer erfindungsgemäßen Anordnung ergeben sich aus den Merkmalen und Vorteilen der erfindungsgemäßen Verfahren sowie der nachfolgenden, die Erfindung näher erläuternden Ausführungsbeispielen, die anhand der beiliegenden Zeichnungen beschrieben werden. Von diesen zeigen:
Figur 1 in Form eines schematisierten Sequenzdiagramms einen Anwendungsfall des erfindungsgemäßen Verfahrens;
Figur 2 in Form eines schematisierten Blockdiagramms ein erstes Ausführungsbeispiel einer erfindungsgemäßen Anordnung;
Figur 3 in Form eines schematisierten Blockdiagramms ein zweites Ausführungsbeispiel einer erfindungsgemäßen Anordnung;
Figur 4a) und 4b) zwei schematisierte Änsichten der Anzeige einer Anzeigeeinheit eines Endgerätes einer erfindungsgemäßen Anordnung.

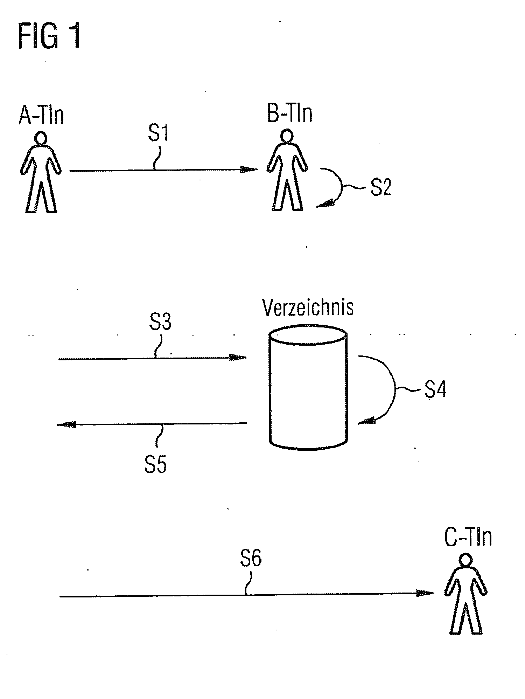

Unter Bezugnahme auf die Figur 1 wird zunächst ein typischer Anwendungsfall des erfindungsgemäßen Verfahrens aus Benutzersicht geschildert. Die Anwendungsschritte sind mit "S1" "S7" bezeichnet.

Im Schritt S1 des Anwendungsfalles erfolgt am Endgerät des B-Teilnehmers (B-Tln) ein Anruf, der von dem Endgerät des A-Teilnehmers (A-Tln) ausgeht. Da der B-Teilnehmer nicht anwesend ist und auch keine herkömmliche Anrufweiterleitung, beispielsweise auf einen Anrufbeantworter, aktiviert hat, wird der Ruf nicht angenommen. Dieser Zustand, während dessen der A-Teilnehmer ein Klingelzeichen hört, ist als Schritt S2 in der Figur 1 bezeichnet.

Für den A-Teilnehmer ist ein erfindungsgemäßer Weiterleitungs-Dienst eingerichtet. Daher drückt im dritten Schritt S3 der A-Teilnehmer an seinem Endgerät eine Taste, die mit der Aufschrift "Rufe Kollege" versehen ist. In Reaktion auf den Tastendruck sendet das erfindungsgemäß ausgebildete Endgerät des A-Teilnehmers eine Nachricht, nämlich eine Ermittlungsanfrage-Nachricht, an einen Telekommunikationsdienst, d.h. genauer an eine zentrale Einheit, mittels der der Telekommunikationsdienst implementiert ist. Der Dienst ermittelt durch Zugriff auf ein Organisationsverzeichnis Rufnummern von Kollegen des B-Teilnehmers im Anwendungsschritt S4.

Im fünften Schritt S5 werden die ermittelten Rufnummern, d.h. die Weiterleitungsinformationen, an das Endgerät des A-Teilnehmers übermittelt und dort an einer Anzeigeeinheit des Endgerätes angezeigt. Im sechsten Schritt S6 wählt der A-Teilnehmer unter den angezeigten Rufnummern, die zweckmäßigerweise um zusätzliche Informationen ergänzt sind, beispielsweise die Namen und/oder Funktionsbezeichnungen der Kollegen, eine Nummer aus. Die Auswahl kann durch Steuertasten, die am Endgerät zur Navigation in der Anzeigeeinheit ausgebildet sind, vorgenommen werden.

Die ausgewählte Rufnummer wird daraufhin im siebten Schritt S7 vom Endgerät des A-Teilnehmers verwendet, um eine Verbindung zu dem Endgerät des ausgewählten Kollegen, d.h. des C-Teilnehmers (C-Tln), aufzubauen.

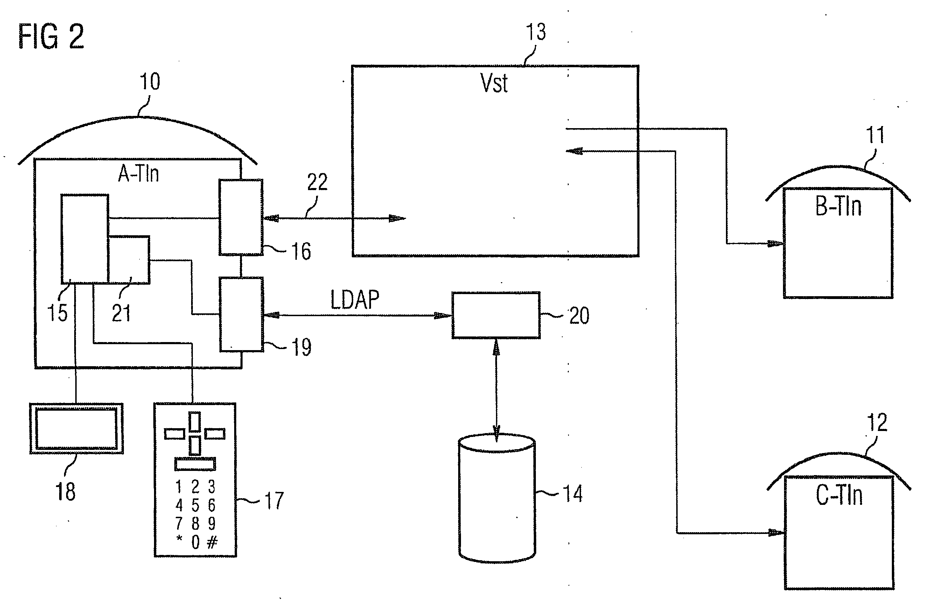

Figur 2 zeigt ein erstes Ausführungsbeispiel einer erfindungsgemäßen Anordnung mit einem ersten Endgerät des A-Teilnehmers 10, einem zweiten Endgerät 11 und dritten Endgerät 12 des B- bzw. C-Teilnehmers. Die Endgeräte sind über eine Vermittlungsstelle 13 miteinander verbindbar. In einem Verzeichnissystem 14 liegt, beispielsweise in Form einer Datenbank, eine Liste der Rufnummern aller an die Vermittlungsstelle 13 angeschlossenen Teilnehmer vor. Für jeden Eintrag in der Liste ist eine Reihe von Attributen ("Rufnummer", etc.) definiert, wobei eines der Attribute (mit der Bezeichnung "Kollegen") eine oder mehrere Rufnummern von Kollegen enthalten kann.

Ist das Verzeichnissystem 14 ein bereits vorhandenes elektronischen Verzeichnissystem, in dem kein Attribut "Kollegen" für die Einträge definiert ist, so ist es alternativ auch denkbar, stattdessen ein bereits vorhandenes Attribut, z.B. "Department/Abteilung" zur automatischen Ermittlung von Kollegen heranzuziehen. Als weitere Alternative ist es denkbar, dass eines der (bekannten oder neu zu definierenden) Attribute ("Raum") die Raumnummer angibt, in der sich das Endgerät befindet, dem die entsprechende Rufnummer zugewiesen ist. In diesem Falle wären zur Suche nach Kollegen des B-Teilnehmers solche Rufnummern zu ermitteln, deren Attribut "Raum" den gleichen Attributwert aufweist, d.h. die gleiche Raumnummer. Ggf. kann, sofern sich Mitglieder verschiedener Abteilungen ein (Großraum-) Büro teilen, eine Abfrage mehrerer Attribute mit Kombination der Ergebnisse sinnvoll sein, so dass bspw. alle Rufnummern ermittelt werden, deren Attribut "Raum" den gleichen Attributwert aufweist, und deren Attribut "Abteilung" den gleichen Wert (die Abteilungsbezeichnung) aufweist wie das entsprechende Attribut der Rufnummer des B-Teilnehmers.

In dem Endgerät 10 des A-Teilnehmers befindet sich eine Steuereinrichtung 15 zum Steuern des Auf- und Abbaus von Verbindungen gemäß den Kommunikationsprotokollen, die zwischen dem Endgerät 10 und der Vermittlungsstelle 13 zur Anwendung kommen (z.B. ISDN, QSIG oder Voice over IP). Hierzu ist das Endgerät 10 mit einer Schnittstelle 16 an das Telekommunikationsnetz angebunden. Des Weiteren liegt in dem Endgerät 10 eine Eingabeeinheit 17 sowie ein Display bzw. eine Anzeigeeinheit 18 vor. Erfindungsgemäß liegt in dem Endgerät 10 ferner eine Benutzer-Abfrageeinheit 19 vor, die einen Benutzeragenten implementiert. Dieser ist zum Austausch von Nachrichten mit einem Verzeichnissystemagenten ausgebildet, der durch eine Verzeichnissystem-Abfrageeinheit 20 implementiert ist. Die Einheit 20 ist zur Ermittlung von Informationen aus dem Verzeichnissystem 14 mittels LDAP ("Lightweight Directory Access Protocol") ausgebildet.

Anhand der in der Figur 2 dargestellten Anordnung wird jetzt der oben unter Bezug auf die Figur 1 geschilderte Anwendungsfall im Detail diskutiert.

Anwendungsschritt S1: Um den B-Teilnehmer am Endgerät 11 zu erreichen, wählt der A-Teilnehmer an seinem Endgerät 10 in herkömmlicher Weise die Rufnummer des B-Teilnehmers, in dem er diese über die Eingabeeinheit 17 eingibt. Der Aufbau der Verbindung erfolgt in bekannter Weise gemäß dem zum Einsatz kommenden Telekommunikationsprotokollen bzw. -standards. Zusätzlich wird die Rufnummer des B-Teilnehmers, d.h. die dem Endgerät 11 zugewiesene Rufnummer, im Endgerät 10, speziell in einer Weiterleitungs-Steuereinheit 21, zwischengespeichert. Je nach verwendeten Kommunikationsprotokollen kann auf dem Verbindungsast 22 zwischen Endgerät 10 und Verbindungsstelle 13 bereits ein Sprachkanal reserviert und freigeschaltet sein, beispielsweise in Richtung auf das Endgerät 10, um diesem von der Vermittlungsstelle 13 ein Freizeichen zu übermitteln.

Anwendungsschritt S2: In Reaktion auf den Verbindungsaufbauwunsch vom Endgerät 10 ertönt am Endgerät 11 des B-Teilnehmers ein entsprechender Signal- bzw. Klingelton. Ohne Abnehmen des Hörers oder ein entsprechendes Annehmen des Verbindungsaufbauwunsches wird jedoch keine bidirektionale Sprachverbindung zwischen den Endgeräten 10 und 11 aufgebaut. Für den weiteren Fortgang des erfindungsgemäßen Verfahrens ist es unerheblich, aus welchem Grund der B-Teilnehmer den Ruf nicht annimmt. Es ist denkbar, dass der B-Teilnehmer nicht anwesend ist, oder dass über das Endgerät 11 bereits ein Gespräch geführt wird, das Endgerät 11 also besetzt ist. Ebenso kann es sein, dass der B-Teilnehmer eine automatische Weiterleitung bzw. Umlenkung auf einen Anrufbeantworter aktiviert hat. Alle diese Fälle werden in geeigneter Weise dem Endgerät 10 signalisiert, beispielsweise durch ein Klingelzeichen, ein Besetztzeichen, oder die Ansage des Anrufbeantworters.

Anwendungsschritt S3: Der A-Teilnehmer drückt nunmehr an seinem Endgerät 10, ohne vorher aufzulegen oder die Verbindung, die mindestens zwischen dem Endgerät 10 und der Vermittlungsstelle 13 aufgebaut ist, explizit auszulösen, eine Taste "Rufe Kollege", die als Teil der Eingabeeinheit 17 vorliegt. Die Eingabe wird an die Steuerungseinrichtung 15 übermittelt, die ein entsprechendes Kommando an die Weiterleitungs-Steuereinheit 21 übermittelt. Die Steuereinheit 21 übergibt in Reaktion auf das Kommando die zwischengespeicherte Rufnummer des B-Teilnehmers an die Benutzer-Abfrageeinheit 19. Diese steht über eine Internet-Verbindung und mittels des LDAP-Protokolls mit der Verzeichnissystem-Abfrageeinheit 20 in Verbindung und übermittelt der Einheit 20 in einer Ermittlungsanfrage-Nachricht die Rufnummer des B-Teilnehmers, sowie als zusätzliche Information eine Attributbezeichnung, nämlich die Bezeichnung des Attributs "Kollegen".

Anwendungsschritt S4: Je nach Aufbau des Verzeichnisses bzw. der Verzeichnisse im Verzeichnissystem 14 ermittelt jetzt die Verzeichnissystem-Abfrageeinheit 20 die der Rufnummer des B-Teilnehmers zugeordneten Rufnummern von Kollegen. Beispielsweise können die Rufnummern explizit in einem entsprechenden Attribut "Kollegen" jeder Rufnummer zugeordnet sein, oder die Verzeichnissystem-Abfrageeinheit 20 ist ausgebildet, um Rufnummern über den Vergleich von Attributwerten zu ermitteln. Es ist z.B. denkbar, alle Rufnummern zu ermitteln, die Endgeräten zugeordnet sind, die sich mit dem Endgerät 11 des B-Teilnehmers im gleichen Raum befinden.

Anwendungsschritt S5: Die Weiterleitungsinformationen, die die ermittelten Rufnummern sowie ggf. diesen zugeordnete Attributwerte betreffen, beispielsweise Teilnehmernamen und/oder Funktionsbezeichnungen und/oder Charakterisierungen der Telefonnummern (geschäftlich/privat/mobil/Sekretariat) werden mittels des LDAP-Protokolls von der Verzeichnissystem-Abfrageeinheit 20 an die Benutzer-Abfrageeinheit 19 übermittelt.

Anwendungsschritt S6: Die Weiterleitungsinformationen werden von der Benutzer-Abfrageeinheit 19 geräte-intern an die Weiterleitungs-Steuereinheit 21 übergeben. Diese speichert die Informationen zwischen und übergibt alle oder einen Teil der Weiterleitungsinformationen an nicht gezeigte Untereinheiten der Steuerungseinrichtung 15, die weiterhin dazu ausgebildet ist, die Darstellung dieser Informationen auf der Anzeigeeinheit 18 zu steuern. Der A-Teilnehmer wählt aus den ihm präsentierten Rufnummern mittels Steuertasten, die Teil der Eingabeeinheit 17 sind, eine aus.

Anwendungsschritt S7: Die über die Eingabeeinheit 17 ausgewählte Rufnummer wird von der Steuerungseinrichtung 15 in herkömmlicher Weise verwendet, um eine Verbindung zu dem Endgerät 12 eines C-Teilnehmers herzustellen, dem die ausgewählte Rufnummer zugeordnet ist. Vorher wird die Verbindung zum Endgerät 11, soweit sie bereits aufgebaut worden war, abgebaut. Dies betrifft auch den Verbindungsast 22.

Das geschilderte Verfahren ermöglicht es dem A-Teilnehmer, in einfacher Weise mittels zweier Eingaben an seinem Endgerät, eine Weiterleitung zu einem von ihm ausgesuchten Teilnehmer, der in einer von mehreren, durch das Verzeichnissystem vorgegebenen Beziehungen zu dem ursprünglichen B-Teilnehmer stehen kann, auszuwählen und eine Verbindung zu diesem C-Teilnehmer aufzubauen. Hierzu ist keinerlei aufwendige Ermittlung der Rufnummer durch den A-Teilnehmer erforderlich. Es ist denkbar, dass die Ermittlungsergebnisse des Verzeichnissystemagenten von weiteren Parametern abhängig sind, wie beispielsweise der Tageszeit oder der An- bzw. Abwesenheit von Personen. Hierdurch kann zusätzlich sichergestellt werden, dass dem A-Teilnehmer jederzeit geeignete Ansprechpartner vorgeschlagen werden.

Die Verbindung 22 sowie die LDAP-Verbindung zwischen dem Benutzeragenten und dem Verzeichnissystemagenten können über eine einzigen Anschluss des Endgerätes 10 verlaufen, wenn dieses ein für die Internet-Telefonie geeignetes Gerät ist. Alternativ kann die Übermittlung von Nachrichten zwischen dn Agenten auch gemäß dem X.500-Standard erfolgen. Die entsprechende Kommunikation zwischen den Agenten kann dann auch über eine ISDN-Verbindung verlaufen. Ist die Verbindung 22 eine solche, ist wiederum nur ein herkömmlicher ISDN-Anschluss zum Anschließen des in diesem Falle als ISDN-Gerät ausgebildeten Endgerätes 10 erforderlich.

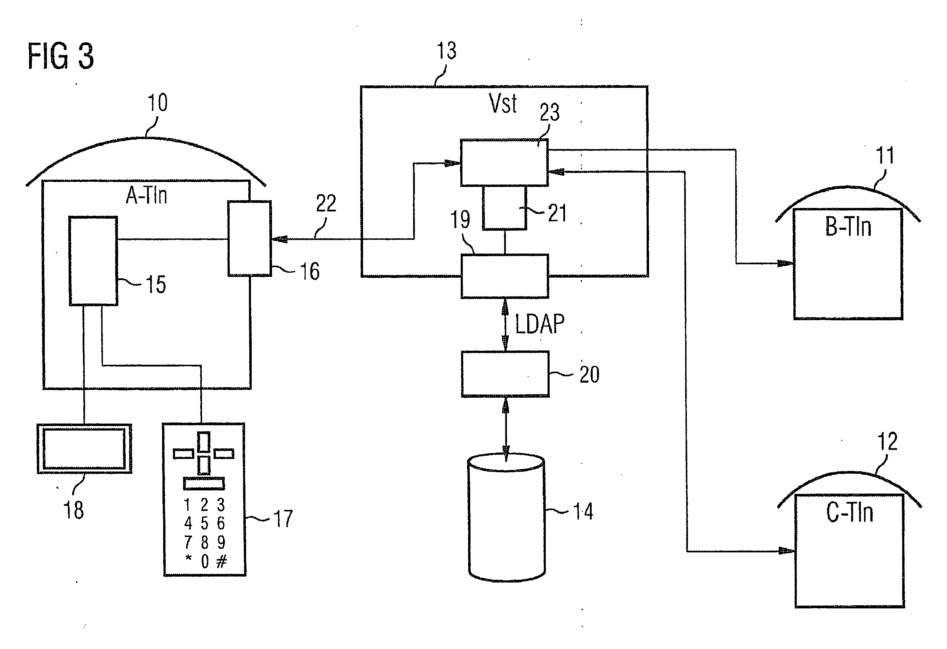

Ein zweites Ausführungsbeispiel einer erfindungsgemäßen Anordnung ist in der Figur 3 gezeigt. In den Figuren sind gleiche und gleichwirkende Elemente mit gleichen Bezugsziffern bezeichnet.

Im ersten Ausführungsbeispiel ist eine Weiterleitungs-Steuereinheit 21 im Endgerät 10 ausgebildet. Im vorliegenden Ausführungsbeispiel ist, wie in der Figur 3 gezeigt, die Weiterleitungs-Steuereinheit 21 in der Vermittlungsstelle 13 ausgebildet. Entsprechend liegt eine Benutzer-Abfrageeinheit 19 nicht im Endgerät 10, sondern in der Vermittlungsstelle 13 vor.

Hierdurch ergibt sich zu dem anhand der Figur 2 geschilderten Verfahren im Anwendungsschritt S3 (siehe Figur 1) ein Unterschied. Die vom A-Teilnehmer gedrückte "Rufe Kollege"-Taste, die Teil der Eingabeeinheit 17 ist, bewirkt nach wie vor, dass von der Steuereinrichtung 15 des Endgerätes 10 ein entsprechendes Kommando an die Weiterleitungs-Steuereinheit 21 übermittelt wird. Diese ist jetzt jedoch nicht mehr intern im Endgerät 10 angesiedelt. Zur Übermittlung eines Kommandos kann jedoch ein Steuerkommando vom Endgerät 10 an die Vermittlungsstation 13, beispielsweise über die in Bezug auf den Aufbau der Verbindung 22 bestehenden Signalisierungsverbindungen, übermittelt werden. Dieses Steuerkommando wird von der Steuereinrichtung 23 der Vermittlungsstation an die Weiterleitungs-Steuereinheit 21 übergeben.

Die Rufnummer des B-Teilnehmers liegt in der Vermittlungsstation 13 bereits vor, da diese Nummer zum Aufbau der Verbindung zum Endgerät 11 bereits verwendet worden ist. Die Ermittlung der dem B-Teilnehmer zugeordneten Rufnummern erfolgt daher wie im ersten Ausführungsbeispiel beschrieben.

Im Anwendungsschritt S5 werden in Fig. 3 gemäß dem zweiten Ausführungsbeispiel die ermittelten Weiterleitungsinformationen von der Weiterleitungs-Steuereinheit 21 an die Steuereinheit 23 übergeben, die diese über die bestehenden Signalisierungsverbindungen an das Endgerät 10, bzw. dessen Steuereinrichtung 15 übermittelt. Die Weiterleitungsinformationen können dann an der Anzeigeeinheit 18 angezeigt werden, wie oben geschildert.

Die vom A-Teilnehmer ausgewählte Rufnummer wird im Schritt S6 vom Endgerät 10 an die Vermittlungsstation 13, d.h. deren Steuereinrichtung 23, übermittelt. Zum Aufbau einer Verbindung zum C-Teilnehmer bzw. dessen Endgerät 12 ist es nicht erforderlich, den Verbindungsast 22, der im Rahmen des Aufbaus der Verbindung zum Endgerät 11 aufgebaut wurde, auszulösen. Dieser Verbindungsast 22 kann vielmehr für die Verbindung zum C-Teilnehmer verwendet werden, was die Aufbauzeiten gegenüber dem ersten Ausführungsbeispiel verkürzt. Gleichzeitig wird der Verbindungsast von der Vermittlungsstation 13 zum Endgerät 11 ausgelöst.

Dieses zweite Ausführungsbeispiel bietet den Vorteil, dass das Endgerät 10 zur Durchführung des erfindungsgemäßen Verfahrens nur geringfügig oder gar nicht modifiziert werden muss, d.h. es können handelsübliche Endgeräte verwendet werden. Der durch die (in den geschilderten Beispielen) verwendete "Rufe Kollege"-Taste erzeugte Steuerbefehl kann durch Programmierung der Taste bspw. in einen Steuercode umgesetzt werden, der mittels Signalisierung in herkömmlicher Weise an die Vermittlungsstation übermittelt wird. Der Steuercode wird in der Vermittlungsstation 13 von deren Steuereinrichtung 23 in erfindungsgemäßer Weise interpretiert. Der zentrale Telekommunikationsdienst würde also ausschließlich Modifikationen bzw. Implementierungen an existierenden vermittlungsstationen erfordern.

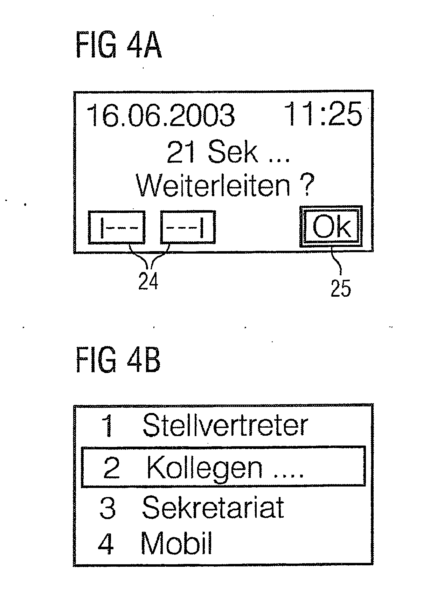

Die Figuren 4a) und 4b) zeigen jeweils eine Anzeige einer Anzeigeeinheit eines Endgerätes einer erfindungsgemäßen Anordnung. Bspw. kann während des oben beschriebenen Anwendungsschrittes S2 dem A-Teilnehmer die Anzeige der Figur 4a) präsentiert werden. Es kann ihm die Zeit angezeigt werden, die seit dem ersten Klingelton am Endgerät des B-Teilnehmers vergangen ist, und es kann ihm die Möglichkeit der erfindungsgemäßen Weiterleitung angeboten werden. In der Anzeige werden verschiedene Icons 24, 25 angezeigt, deren Anwahl zur Anzeige weiterer Informationen auf der Anzeigeeinheit führt. Die Icons können durch bekannte Steuertasten der Eingabeeinheit 17 der Fig. 2 bzw. 3 ausgewählt werden. Die Auswahl bzw. Aktivierung des Icons 25 ("Ok") entspricht der in den ersten beiden Ausführungsbeispielen erwähnten "Rufe Kollege"-Taste. Durch Auswahl des Icons 25 wird die Übermittlung einer Ermittlungsanfrage-Nachricht vom Endgerät 10 an die Verzeichnissystem-Abfrageeinheit (20) in der oben beschriebenen Weise bewirkt.

In Reaktion auf die von der Verzeichnissystem-Abfrageeinheit ermittelten Weiterleitungsinformationen wird dem A-Teilnehmer eine neue Anzeige auf der Anzeigeeinheit präsentiert, bspw. wie in der Figur 4b) dargestellt. Diese Anzeige stellt insofern eine Fortführung des in den ersten beiden Ausführungsbeispielen geschilderten Verfahrens dar, als es nicht nur möglich ist, einen oder mehrere Kollegen des B-Teilnehmers zu erreichen, sondern der A-Teilnehmer kann auswählen, ob er einen Stellvertreter, das dem B-Teilnehmer zugeordnete Sekretariat oder aber das Mobilfunkendgerät des B-Teilnehmers erreichen möchte. Viele weitere derartige Optionen sind denkbar, diese könnten durch zusätzliche Einträge auf der Anzeigeeinheit präsentiert werden.

Der A-Teilnehmer kann durch Auswahl einer Zeile unmittelbar einen Verbindungsaufbau zu der bezeichneten Stelle erreichen, beispielsweise zum Sekretariat. Alternativ kann er durch Auswahl der Zeile "Kollegen ...", die in der Fig. 4b) angedeutet ist, ein Untermenü erreichen, welches dann mehrere Kollegen des B-Teilnehmers auflistet, die sich entweder im gleichen Büroraum aufhalten und/oder der gleichen Abteilung angehören. Weiterhin ist denkbar, dass der A-Teilnehmer einen der Einträge der Figur 4b) auswählt, indem er einen Sprachbefehl in den Hörer oder ein Mikrofon seines Endgerätes, zu dem die Anzeigeeinheit gehört, spricht, beispielsweise die Worte "Nimm 3" oder "Verbinde mit 3" (um unmittelbar beim Sekretariat anzurufen). Da er ohnehin den Telefonhörer in der Hand hält, bzw. sich nahe einem mit dem Endgerät verbundenen Eingabemikrofons befindet, ist diese Eingabe eines Sprachbefehls für den A-Teilnehmer besonders komfortabel. Das Endgerät muss hierzu über ein Spracherkennungssystem verfügen

Es ist dem Fachmann offensichtlich, dass viele weitere Möglichkeiten der Auswahl von Weiterleitungsoptionen denkbar sind. Beispielsweise kann sogar an Telefonen ohne Anzeigeeinheit eine Auswahl vorgenommen werden, indem beispielsweise eine Kombination von *-Taste, #-Taste und Ziffern als Auswahlkommando vorgegeben werden. Beispielsweise könnte die Folge ,*41' das Kommando "Rufe Kollegen" repräsentieren und '*42' "Rufe Vorgesetzten", usw. Falls eine ausgewählte Option nicht verfügbar ist, würde das Endgerät einen Fehlerton ausgeben, beispielsweise wenn eine mit ,*43' angeforderte Mobilfunknummer des B-Teilnehmers nicht vorliegt.

Ebenso ist es erfindungsgemäß vorgesehen, dass der A-Teilnehmer durch einmaliges Konfigurieren seines Endgerätes erreicht, dass der erfindungsgemäße Dienst automatisch, bspw. nach fünfmaligem Klingeln, dem B-Teilnehmer zugeordnete Rufnummer(n) ermittelt.

Eine Vielzahl weiterer Modifikationen der hier beispielhaft geschilderten Ausführungsformen der Erfindung sind denkbar. Beispielsweise ist in den Figuren 2 und 3 nur jeweils eine Vermittlungsstelle gezeichnet. Selbstverständlich kann das sich zwischen den Teilnehmern erstreckende Telekommunikationsnetz aus mehreren Teilnetzen bestehen, wobei jedes Teilnetz wiederum aus einer Mehrzahl von Vermittlungsstellen gebildet werden kann. Verschiedene Kommunikationsprotokolle bzw. Protokollfamilien können in den Teilnetzen zum Einsatz kommen, beispielsweise kann die Verbindung zwischen dem Endgerät des A-Teilnehmers und der Vermittlungsstelle auf der ISDN- oder QSIG-Protokollsuite basieren. Ebenso kann das Endgerät des A-Teilnehmers ein IP-Phone sein und die Übertragung von Gesprächs- bzw. Signalisierungsdaten kann über IP-Protokolle erfolgen.

Das Endgerät des A-Teilnehmers muss kein herkömmliches Telefon sein, es kann sich etwa bei computerunterstütztem Telefonieren ("Computer-Telephony-Integration", CTI) auch um einen CTI-client handeln.

Weiterhin kann die Kommunikation zwischen den Agenten, d.h. zwischen der Benutzer-Abfrageeinheit und der Verzeichnissystem-Abfrageeinheit statt auf dem LDAP-Protokoll ebenso auf dem X.500-Standard beruhen, oder weiteren derartigen Protokollen bzw. Standards für Verzeichnissysteme. Es können auch, insbesondere im Falle der mit Bezug auf die Figur 3 geschilderten Anordnung, mehrere Benutzeragenten auf einen Verzeichnissystemagenten zugreifen. Ebenso ist es denkbar, dass in einer erfindungsgemäßen Anordnung eine Mehrzahl von Verzeichnissystemagenten vorliegt. Eine Anfrage, die von einer Benutzer-Abfrageeinheit bei einer Verzeichnissystem-Abfrageeinheit eingeht, wird, sofern diese Einheit die Anfrage nicht selbst beantworten kann, an die weiteren Verzeichnissystem-Abfrageeinheiten weitergeleitet. Diese übermitteln ihre Ergebnisse entweder direkt an die anfragende Benutzer-Abfrageeinheit, oder über die ursprüngliche Verzeichnissystem-Abfrageeinheit.

Benutzeragent wie auch Verzeichnissystemagent und auch das Verzeichnissystem selbst können einzeln oder in Kombination auf einem Endgerät implementiert sein. Dies kann in kleinen Netzen sinnvoll sein, in denen ein Endgerät diese erweiterte Funktionalität übernimmt (bspw. die Telefonanlage an einer Rezeption eines Bürokomplexes).

Im Rahmen des erfindungsgemäßen Grundgedankens, wie er durch die nachfolgenden Ansprüche angegeben wird, sind durch fachmännisches Handeln weitere Ausführungsformen denkbar, ohne dass der Geltungsbereich der Erfindung verlassen wird.

## Patentansprüche

1. Verfahren zur Rufweiterleitung, bei dem eine an einem ersten Telekommunikations-Endgerät (10) eingegebene erste Rufnummer, die einem zweiten Endgerät (11) zugewiesen ist, für einen Verbindungsaufbau (S1) zum zweiten Endgerät (11) hin verwendet wird und der Ruf am zweiten Endgerät (11) nicht angenommen wird (S2), wobei
- vom ersten Endgerät (10) die Übermittlung einer die erste Rufnummer enthaltenden Ermittlungsanfrage-Nachricht zur Ermittlung einer alternativen Rufnummer an einen automatischen Telekommunikationsdienst (20) ausgelöst wird (S3),
- der Telekommunikationsdienst daraufhin mittels einer elektronisch gespeicherten Zuordnungsvorschrift aus einem elektronischen Verzeichnissystem (14), welches die erste Rufnummer und eine Vielzahl von weiteren Endgeräten zugewiesenen Rufnummern enthält, eine zweite Rufnummer eines dritten Endgerätes (12) ermittelt (S4),
**dadurch gekennzeichnet, dass**
- durch einmaliges Konfigurieren des ersten Endgerätes (10) erreicht wird, dass die Übermittlung der Ermittlungsanfrage-Nachricht automatisch, beispielsweise nach fünfmaligem Klingeln, ausgelöst wird, und
- nach Ermittlung (S4) der zweiten Rufnummer automatisch ein Verbindungsaufbau zwischen dem ersten und dritten Endgerät (10, 12) unter Verwendung der zweiten Rufnummer veranlasst wird (S7).

2. Verfahren nach Anspruch 1,
**dadurch gekennzeichnet, dass**
die der ersten Rufnummer zugeordnete zweite Rufnummer nach fünfmaligem Klingeln automatisch ermittelt wird.

3. Verfahren nach Anspruch 1 oder 2,
**dadurch gekennzeichnet, dass**
in dem Verzeichnissystem jeder Rufnummer Attribute mit Attributwerten zugeordnet sind.

4. Verfahren nach Anspruch 3,
**dadurch gekennzeichnet, dass**
die Zuordnungsvorschrift ein Attribut der ersten Rufnummer betrifft, das die zweite Rufnummer enthält.

5. Verfahren nach Anspruch 3 oder 4,
**dadurch gekennzeichnet, dass**
die Zuordnungsvorschrift ein Attribut betrifft, dessen Wert bei der ersten und der zweiten Rufnummer gleich ist.

6. Verfahren nach einem der vorhergehenden Ansprüche,
**dadurch gekennzeichnet, dass**
eine Anfrage, die von einer in dem ersten Endgerät (10) vorliegenden Benutzer-Abfrageeinheit (19) bei einer ersten Verzeichnissystem-Abfrageeinheit (20) eingeht, an weitere Verzeichnissystem-Abfrageeinheiten weitergeleitet wird, sofern die erste Verzeichnissystem-Abfrageeinheit (20) die Anfrage nicht selbst beantworten kann, und
die weiteren Verzeichnissystem-Abfrageeinheiten ihre Ergebnisse direkt oder über die erste Verzeichnissystem-Abfrageeinheit (20) an die anfragende Benutzer-Abfrageeinheit (19) übermitteln.

7. Verfahren nach einem der vorhergehenden Ansprüche,
**dadurch gekennzeichnet, dass**
der Telekommunikationsdienst in Reaktion auf die Ermittlungsanfrage-Nachricht Ermittlungsergebnis-Informationen an das erste Endgerät (10) übermittelt, die die oder jede zweite Rufnummer betreffen, und
die Ermittlungsergebnis-Informationen auf eine Anzeigeeinheit (18) des ersten Endgerätes (10) oder mittels Sprachausgabe ausgegeben werden.

8. Verfahren nach Anspruch 7,
**dadurch gekennzeichnet, dass**
der Benutzer nach Ausgabe der Ermittlungsergebnis-Informationen
durch eine zweite Eingabe den Verbindungsaufbau (S7) zum dritten Endgerät (12) bewirkt.

9. Verfahren nach einem der vorhergehenden Ansprüche,
**dadurch gekennzeichnet, dass**
der Telekommunikationsdienst (20) und/oder das Verzeichnissystem (14) auf einer zentralen Vermittlungsstelle (13) oder verteilt auf mehreren Vermittlungsstellen implementiert ist.

10. Verfahren nach einem der vorhergehenden Ansprüche,
**dadurch gekennzeichnet, dass**
der Telekommunikationsdienst (20) und/oder das Verzeichnissystem (14) auf dem ersten Endgerät (10) implementiert ist.

11. Anordnung mit einer Mehrzahl von über eine Vermittlungsstelle (13) verbindbaren Telekommunikations-Endgeräten (10, 11, 12) zur Durchführung eines Verfahrens nach einem der vorhergehenden Ansprüche, bei der
- ein erstes Endgerät (10) oder die Vermittlungsstelle (13) eine Weiterleitungs-Steuereinheit (21) aufweist,
die ausgebildet ist, um in Reaktion auf ein Auslösen der Übermittlung einer Ermittlungsanfrage-Nachricht vom ersten Endgerät (10) zur Ermittlung einer alternativen Rufnummer eine zuvor am ersten Endgerät eingegebene erste Rufnummer an eine erste Verzeichnissystem-Abfrageeinheit (20) zu übermitteln, die zur Abfrage eines elektronischen Verzeichnissystems (14) ausgebildet ist, um eine der ersten Rufnummer zuordenbare zweite Rufnummer zu ermitteln, und diese an die Weiterleitungs-Steuereinheit (21) zu übermitteln,
**dadurch gekennzeichnet, dass**
- das erste Endgerät (10) dazu ausgebildet ist, dass durch einmaliges Konfigurieren des ersten Endgerätes (10) erreicht wird, dass die Übermittlung der Ermittlungsanfrage-Nachricht automatisch, beispielsweise nach fünfmaligem Klingeln, ausgelöst wird, und
- das erste Endgerät (10) oder die Vermittlungsstelle (13) ausgebildet ist, um mittels der zweiten Rufnummer ohne Eingabe des Benutzers automatisch den Aufbau einer Verbindung zum dritten Endgerät (12) hin zu veranlassen.

12. Anordnung nach Anspruch 11,
**dadurch gekennzeichnet, dass**
die Verzeichnissystem-Abfrageeinheit (20) der Vermittlungsstelle (13) oder dem Endgerät (10) funktional zugeordnet ist.

13. Anordnung nach Anspruch 11 oder 12,
**dadurch gekennzeichnet, dass**
die Weiterleitungs-Steuereinheit (21) ausgebildet ist, um in Reaktion auf den Empfang der zweiten Rufnummer ein Steuerkommando zu übermitteln, um einen Verbindungsaufbau vom ersten Endgerät (10) hin zu einem dritten Endgerät (12) zu veranlassen, dem die zweite Rufnummer zugeordnet ist.

14. Anordnung nach einem der Ansprüche 11 bis 13,
**dadurch gekennzeichnet, dass**
weitere Verzeichnissystem-Abfrageeinheiten derart vorhanden sind, dass
eine Anfrage, die von einer in dem ersten Endgerät (10) vorliegenden Benutzer-Abfrageeinheit (19) bei der ersten Verzeichnissystem-Abfrageeinheit (20) eingeht, an die weiteren Verzeichnissystem-Abfrageeinheiten weitergeleitet wird, sofern die erste Verzeichnissystem-Abfrageeinheit (20) die Anfrage nicht selbst beantworten kann, und
die weiteren Verzeichnissystem-Abfrageeinheiten ihre Ergebnisse direkt oder über die erste Verzeichnissystem-Abfrageeinheit (20) an die anfragende Benutzer-Abfrageeinheit (19) übermitteln.

15. Anordnung nach einem der Ansprüche 11 bis 14,
**dadurch gekennzeichnet, dass**
am ersten Endgerät (10) wenigstens eine der folgenden Einrichtungen ausgebildet ist, um die erste Eingabe des Benutzers und/oder eine zweite Eingabe des Benutzers, mit der dieser eine von einer Mehrzahl von zweiten Rufnummern auswählt, entgegenzunehmen:
- eine oder mehrere vorbelegte Tasten (17),
- eine Anzeigeeinheit (18) mit zugeordneten Steuertasten (17) zum Navigieren und Auswählen eines Menüpunktes aus einem auf der Anzeigeeinheit (18) angezeigten Menüs (),
- ein Spracherkennungssystem zum Erkennen der ersten und/oder zweiten, als Spracheingabe erfolgenden, Eingabe des Benutzers.

## Claims

1. A method of call forwarding in which a first call number which is entered on a first telecommunications terminal (10) and which is assigned to a second terminal (11) is used to make a call connection (S1) to the second terminal (11) and the call is not accepted (S2) at the second terminal (11), whereupon
- the first terminal (10) initiates the transmission to an automatic telecommunications service (20) of a search request message for determining an alternative call number and containing the first call number (S3),
- whereupon by way of an electronically stored assignment rule, the telecommunications service determines from an electronic directory (14) which contains the first call number and a plurality of call numbers assigned to other terminals, a second call number of a third terminal (12) (S4),
**characterised in that**
- by once configuring the first terminal (10) it is possible for the transmission of the search request message to be initiated automatically, for example after five rings, and
- when the second call number has been determined (S4), a call connection between the first and third terminal (10, 12) is automatically initiated using the second call number (S7).

2. The method of claim 1 wherein the second call number assigned to the first call number is automatically determined after five rings.

3. The method of claim 1 or 2 wherein attributes with attribute values are assigned to each call number in the directory.

4. The method of claim 3 wherein the assignment rule concerns an attribute of the first call number and which contains the second call number.

5. The method of claim 3 or 4 wherein the assignment rule concerns an attribute whose value is the same with the first and the second call number.

6. The method of any one of the preceding claims wherein an enquiry that is received by a first directory interrogation unit (20) from a user interrogation unit (19) present in the first terminal (10) is forwarded to other directory interrogation units if the first directory interrogation unit (20) cannot answer the enquiry itself, and the other directory interrogation units send their results to the enquiring user interrogation unit (19) either directly or via the first directory interrogation unit (20).

7. The method of any one of the preceding claims wherein the telecommunications service responds to the search request message by sending to the first terminal (10) search result information which concerns the, or every second, call number, and wherein search result information is output on a display unit (18) of the first terminal (10) or by voice output.

8. The method of claim 7 wherein the user, after the search result information is output, effects a call connection (37) to the third terminal (12) by a second input.

9. The method of any one of the preceding claims wherein the telecommunications service (20) and/or the directory (14) is implemented on a central exchange (13) or distributed on a plurality of exchanges.

10. The method of any one of the preceding claims wherein the telecommunications service (20) and/or the directory (14) is implemented on the first terminal (10).

11. An arrangement having a plurality of telecommunications terminals (10, 11, 12) which can be connected via an exchange (13) to perform a method according to any one of the preceding claims, in which
- a first terminal (10) or the exchange (13) exhibits a forwarding control unit (21) which is configured in such a way that in response to an initiating of the transmission of a search request message from the first terminal (10) to determine an alternative call number it transmits a first call number previously entered on the first terminal to a first directory interrogation unit (20) which is configured to interrogate an electronic directory system (14) so as to determine a second call number which can be assigned to the first call number and transmit it to the forwarding control unit (21), wherein
- the first terminal (10) is configured in such a way that by once configuring the first terminal (10) it is possible for the transmission of the search request message to be initiated automatically, for example after five rings, and
- the first terminal (10) or the exchange (13) is configured so as to automatically initiate the connection of a call to the third terminal (12) by means of the second call number without an input by the user.

12. The arrangement of claim 11 wherein the directory interrogation unit (20) is functionally assigned to the exchange (13) or to the terminal (10).

13. The arrangement of claim 11 or 12 wherein the forwarding control unit (21) is configured so as to transmit, in response to the receipt of the second call number, a control command to initiate a call connection from the first terminal (10) to a third terminal (12) to which the second call number is assigned.

14. The arrangement of any one of claims 11 to 13 wherein further directory interrogation units are provided such that an enquiry received by the first directory interrogation unit (20) from a user interrogation unit (19) present in the first terminal (10) is forwarded to the further directory interrogation units if the first directory interrogation unit (20) cannot answer the enquiry itself, and
the further directory interrogation units transmit their results to the enquiring user interrogation unit (19) directly or via the first directory interrogation unit (20).

15. The arrangement of any one of claims 11 to 14 wherein at least one of the following devices is configured at the first terminal (10) in order to receive the first input of the user and/or a second input of the user by which the latter selects one of a plurality of second call numbers:
- one or a plurality of preassigned keys (17),
- a display unit (18) having assigned keys (17) for navigating and selecting a menu option from a menu ( ) displayed on the display unit (18),
- a voice recognition system for recognising the first and/or second input of the user effected as a voice input.

## Revendications

1. Procédé de transfert d'appel, dans le cadre duquel un premier numéro d'appel entré sur un premier terminal de télécommunication (10), lequel numéro d'appel est attribué à un deuxième terminal (11), est utilisé pour établir une connexion (S1) avec le deuxième terminal (11), et où l'appel n'est pas accepté (S) au niveau du deuxième terminal (11), sachant
- que la transmission d'un message de requête de détermination contenant le premier numéro d'appel est déclenchée (S3) par le premier terminal (10) aux fins de la détermination d'un numéro d'appel alternatif au niveau d'un service de télécommunication (20) automatique,
- que le service de télécommunication détermine (S4) immédiatement après, au moyen d'une instruction d'affectation mémorisée par voie électronique, à partir d'un système d'index (14) électronique, lequel contient le premier numéro d'appel et une pluralité de numéros d'appel attribués à des terminaux supplémentaires, un deuxième numéro d'appel d'un troisième terminal (12), **caractérisé en ce**
- **qu'**on obtient par la configuration unique du premier terminal (10) que la transmission du message de requête de détermination est déclenchée automatiquement, par exemple après cinq sonneries consécutives, et
- en ce qu'une fois le deuxième numéro d'appel déterminé (S4), une connexion entre le premier terminal et le troisième terminal (10, 12) est établie (S7) en utilisant le deuxième numéro d'appel.

2. Procédé selon la revendication 1,
**caractérisé en ce**
**que** le deuxième numéro d'appel affecté au premier numéro d'appel est automatiquement déterminé après cinq sonneries consécutives.

3. Procédé selon la revendication 1 ou 2,
**caractérisé en ce**
**que** des attributs sont affectés à l'aide de valeurs d'attribut à chaque numéro d'appel dans le système d'index.

4. Procédé selon la revendication 3,
**caractérisé en ce**
**que** l'instruction d'affectation concerne un attribut du premier numéro d'appel, lequel contient le deuxième numéro d'appel.

5. Procédé selon la revendication 3 ou 4,
**caractérisé en ce**
**que** l'instruction d'affectation concerne un attribut, dont la valeur est identique à celle du premier ou du deuxième numéro d'appel.

6. Procédé selon l'une quelconque des revendications précédentes,
**caractérisé en ce**
**qu'**une requête, qui arrive en provenance d'une unité d'interrogation de l'utilisateur (19) disponible dans le premier terminal (10) dans une première unité d'interrogation du système d'index (20), est transmise à d'autres unités d'interrogation du système d'index, tant que la première unité de requête du système d'index (20) n'est pas en mesure de répondre elle-même à la requête, et
en ce que les autres unités d'interrogation du système d'index transmettent leurs résultats directement ou par l'intermédiaire de la première unité d'interrogation du système d'index (20) à l'unité de requête de l'utilisateur (19) procédant à la requête.

7. Procédé selon l'une quelconque des revendications précédentes,
**caractérisé en ce**
**que** le service de télécommunication transmet en réponse au message de requête de détermination des informations relatives au résultat de l'opération de détermination au premier terminal (10), lesquelles informations concernent le deuxième numéro d'appel ou chaque deuxième numéro d'appel, et
en ce que les informations relatives au résultat de l'opération de détermination sont délivrées sur une unité d'affichage (18) du premier terminal (10) ou au moyen d'une sortie vocale.

8. Procédé selon la revendication 7,
**caractérisé en ce**
**que** l'utilisateur entraîne l'établissement d'une connexion (S7) avec le troisième terminal (12) par une deuxième entrée à l'issue de la délivrance des informations relatives au résultat de l'opération de détermination.

9. Procédé selon l'une quelconque des revendications précédentes,
**caractérisé en ce**
**que** le service de télécommunication (20) et/ou le système d'index (14) sont implémentés sur un poste central de commutation (13) ou de manière répartie sur plusieurs postes de commutation.

10. Procédé selon l'une quelconque des revendications précédentes,
**caractérisé en ce**
**que** le service de télécommunication (20) et/ou le système d'index (14) sont implémentés sur le premier terminal (10).

11. Ensemble comprenant une pluralité de terminaux de communication (10, 11, 12) pouvant être connectés par l'intermédiaire d'un poste de commutation (13), servant à la mise en oeuvre d'un procédé selon l'une quelconque des revendications précédentes, dans le cadre duquel
- un premier terminal (10) ou le poste de commutation (13) présente une unité de commande de transfert (12), qui est réalisée pour transmettre, en réponse à un déclenchement de la transmission d'un message de requête de détermination, depuis le premier terminal (10), aux fins de la détermination d'un numéro d'appel alternatif, un premier numéro d'appel entré au préalable sur le premier terminal, à une première unité de demande du système d'index (20), qui est réalisée pour interroger un système d'index (14) électronique afin de déterminer un deuxième numéro d'appel pouvant être associé au premier numéro d'appel et afin de transmettre le deuxième numéro d'appel à l'unité de commande de transfert (21),
**caractérisé en ce**
- **que** le premier terminal (10) est réalisé afin d'obtenir par une unique configuration du premier terminal (10) que la transmission du message de requête de détermination soit déclenchée automatiquement par exemple après cinq sonneries consécutives, et
- en ce que le premier terminal (10) ou le poste de commutation (13) sont réalisés pour entraîner, au moyen du deuxième numéro d'appel, sans que l'utilisateur ne procède à une saisie, automatiquement l'établissement d'une connexion avec le troisième terminal (12).

12. Ensemble selon la revendication 11,
**caractérisé en ce**
**que** l'unité d'interrogation du système d'index (20) est associée de manière fonctionnelle au poste de commutation (13) ou au terminal (10).

13. Ensemble selon la revendication 11 ou 12,
**caractérisé en ce**
**que** l'unité de commande de transfert (21) est réalisée pour transmettre, en réponse à la réception du deuxième numéro d'appel, une instruction de commande, afin d'entraîner l'établissement de la connexion depuis le premier terminal (10) vers un troisième terminal (12), auquel le deuxième numéro d'appel est associé.

14. Ensemble selon l'une quelconque des revendications 11 à 13,
**caractérisé en ce**
**que** d'autres unités d'interrogation du système d'index sont disponibles de telle manière
**qu'**une interrogation, qui en provenance d'une unité d'interrogation de l'utilisateur (19) disponible dans le premier terminal (10) parvient dans la première unité d'interrogation du système d'index (20), est transférée aux autres unités d'interrogation du système d'index, tant que la première unité d'interrogation du système d'index (20) n'est pas en mesure de répondre elle-même à la requête, et
en ce que les autres unités d'interrogation du système d'index transmettent leurs résultats directement ou par l'intermédiaire de la première unité d'interrogation du système d'index (20) à l'unité d'interrogation de l'utilisateur (19) procédant à la requête.

15. Ensemble selon l'une quelconque des revendications 11 à 14,
**caractérisé en ce**
**qu'**au moins un des équipements suivants est réalisé sur le premier terminal (10) afin de recevoir la première entrée effectuée par l'utilisateur et/ou une deuxième entrée effectuée par l'utilisateur, à l'aide de laquelle l'utilisateur choisit un numéro d'appel parmi une pluralité de deuxièmes numéros d'appel :
- une ou plusieurs touches (17) prédéfinies,
- une unité d'affichage (18) comprenant des touches de commande (17) associées servant à naviguer et à choisir un point du menu dans un menu s'affichant sur l'unité d'affichage (18),
- un système d'identification vocale servant à identifier la première et/ou la deuxième entrée effectuée par l'utilisateur se faisant sous la forme d'une entrée vocale.
